Europäisches Patentamt

European Patent Office

Office européen des brevets

(19)

(11) **EP 0 937 932 B1**

(12) **FASCICULE DE BREVET EUROPEEN**

(45) Date de publication et mention
de la délivrance du brevet:
**12.01.2005 Bulletin 2005/02**

(51) Int Cl.⁷: **F16L 11/08**

(21) Numéro de dépôt: **98403017.1**

(22) Date de dépôt: **02.12.1998**

(54) **Conduite flexible pour colonne montante dans une exploitation pétrolière en mer**

Flexible Rohrleitung für Steigrohrleitung für Ölgewinnung aus dem Meer

Flexible conduit for a riser for oil exploitation in the sea

(84) Etats contractants désignés:
**DK FR GB**

(30) Priorité: **18.02.1998 FR 9801969**

(43) Date de publication de la demande:
**25.08.1999 Bulletin 1999/34**

(73) Titulaire: **TECHNIP FRANCE**
**92400 Courbevoie (FR)**

(72) Inventeurs:
• **Seguin, Bruno Roger**
**30000 Nîmes (FR)**

• **Maloberti, René Antoine**
**94500 Champigny sur Marne (FR)**

(74) Mandataire: **Levy, David et al**
**c/o S.A. FEDIT-LORIOT & AUTRES**
**CONSEILS EN PROPRIETE INDUSTRIELLE**
**38, Avenue Hoche**
**75008 Paris (FR)**

(56) Documents cités:
WO-A-92/00481          DE-A- 3 440 459
FR-A- 2 557 254          FR-A- 2 619 193
US-A- 4 403 631          US-A- 5 645 109

**Description**

La présente invention concerne une structure hybride pour une conduite flexible constituant une colonne montante dans une exploitation pétrolière en mer et adaptée au transport d'effluents sous pression. La structure selon la présente invention est particulièrement adaptée aux conduites flexibles du type "riser", c'est-à-dire des conduites flexibles déroulées à partir d'une installation de surface telle qu'une plate-forme et qui sont connectées aux installations sous-marines et dont la majeure partie ne repose pas sur le fond marin. De telles conduites flexibles travaillent en dynamique contrairement aux conduites flexibles posées sur le fond marin, dites "flow line" qui travaillent essentiellement en statique.

Les conduites flexibles ou riser qui relient les installations de surface à l'équipement de fond tel qu'une tête de puits ou un collecteur (manifold en anglais) présentent des configurations variées comme par exemple celles qui sont représentées dans le "Recommended Practice for Flexible Pipe" API 17B, édition du 01/06/88.

Les conduites flexibles, conçues pour être utilisées, en mer peu profonde ou à des profondeurs moyennes (typiquement entre 100 et 800 m), présentent des structures qui peuvent varier dans de larges limites, en fonction des conditions d'utilisation.

Les conduites flexibles les plus utilisées dans une exploitation pétrolière sont en général du type non liées (unbonded en anglais) dans lesquelles les différentes couches successives et distinctes présentent une certaine liberté de se déplacer l'une par rapport à l'autre, et elles comprennent de l'intérieur vers l'extérieur, une carcasse constituée par exemple d'un feuillard agrafé qui sert à empêcher l'écrasement de la conduite sous pression externe, une gaine d'étanchéité interne en polymère, une voûte de pression constituée par au moins un fil de forme agrafé et enroulé selon une spirale à faible pas proche de 90°, des armures dites de traction dont l'angle d'armage, mesuré sur l'axe longitudinal de la conduite est inférieur à 55° et une gaine externe d'étanchéité en polymère. Une telle conduite flexible est désignée comme étant un flexible dont l'élément le plus intérieur est constitué par une carcasse (Roughbore en anglais).

Lorsqu'une conduite flexible comprend de l'intérieur vers l'extérieur, une gaine d'étanchéité interne, une voûte de pression constituée par des fils de forme enroulés à pas court et destinée à supporter les contraintes radiales provoquées par la circulation des effluents dans la conduite flexible, une gaine anti-collapse, une ou plusieurs armures de traction et de pression enroulées autour de la gaine anti-collapse et une gaine d'étanchéité externe en polymère, elle est appelée "Smooth-bore" parce que l'élément le plus intérieur est une gaine étanche à paroi lisse.

Les éléments constitutifs de ces diverses structures sont définis dans les documents API 17B et 17J du document rappelé ci-dessus.

Dans une variante, la conduite flexible ne comprend pas de voûte de pression et les nappes d'armures sont spiralées à pas inverse avec des angles d'armage voisins de 55°, Dans ce cas, les pressions interne et externe ainsi que les efforts de traction s'exercent ou sont retenus par ces nappes d'armures ; une telle conduite flexible est dite équilibrée.

Des exemples de structures de conduites flexibles sont décrits par exemple dans FR-A-2 619 193 et FR-A-2 557 254.

Dans FR-A-2 619 193, il est proposé une conduite flexible dont les variations dimensionnelles, notamment dans le sens axial, peuvent être contrôlées de manière à présenter lors d'une mise en pression interne élevée, une stabilité dimensionnelle ou un raccourcissement contrôlé.

Dans FR-A-2 557 254, la conduite flexible est prévue pour ne pas présenter une variation notable de longueur lorsqu'elle est soumise à une pression interne avec "effet de fond direct" qui est induit par la pression régnant dans la conduite flexible.

Dans DE-A-34 40 459, il est décrit une conduite flexible comprenant notamment un ensemble interne étanche et des nappes d'armures de traction. Toutefois, il n'y a qu'un seul groupe d'armures de traction avec une gaine d'étanchéité disposée autour d'un enroulement qui pourrait constituer une voûte de pression, ainsi que cela est décrit notamment dans les documents API 17B et 17J rappelés ci-dessus.

Dans US-A-4 403 631, il est décrit une conduite flexible comprenant de l'intérieur vers l'extérieur, une gaine d'étanchéité interne, une voûte de pression constituée par un ou plusieurs enroulements d'un fil à section appropriée, une gaine anti-collapse, plusieurs nappes d'armures de traction et une gaine d'étanchéité externe. Dans une forme de réalisation, l'angle d'armage de l'enroulement de la voûte de pression est court, par exemple compris entre 60 et 85°, alors que l'angle d'armage des armures de traction est compris entre 0 et 20°. Dans une autre forme de réalisation, l'angle d'armage des armures de traction est compris entre 75 et 90°.

Dans ce dernier document, la gaine disposée entre la voûte de pression et la première nappe d'armures de traction est, comme usuellement admis dans le type de conduite décrit, une gaine anti-collapse. En aucun cas, elle ne peut être considérée comme étant une gaine intermédiaire disposée entre des groupes d'armures de traction.

Dans les conduites flexibles actuellement disponibles, les armures sont calculées pour résister à toutes les sollicitations qu'elles subissent lors de la fabrication, le transport, la pose, le service et la récupération.

Dans le cas où les conduites sont amenées à transporter du gaz, seul ou associé à des liquides, notamment des hydrocarbures liquides ou des mélanges diphasiques, il a été proposé pour assurer l'évacuation du gaz qui diffuse nécessairement à travers les divers éléments constitutifs de la conduite flexible, de rendre le revêtement extérieur relativement perméable dans la partie émergée de la conduite flexible, soit par des trous, soit en choisissant un matériau à perméabilité au gaz plus élevée que celle du matériau du tube interne. Il est également connu de réaliser des zones d'affaiblissement dans le revêtement extérieur, notamment des rainures ou des trous non débouchants pour former des emplacements d'éclatement en cas de surpression, offrant ainsi un passage préférentiel pour l'échappement du gaz (bursting discs). Dans le brevet FR-A-2 553 859, il est prévu de réaliser un débit de fuite à l'aide d'un évidement réalisé dans un embout dont est munie la conduite et qui communique avec l'espace annulaire extérieur de l'ensemble des armatures.

Dans EP 0 341 144, il est décrit une conduite flexible dans laquelle est ménagée une tubulure qui met en communication la zone annulaire externe avec l'environnement extérieur, ladite tubulure débouchant, d'une part, entre la gaine d'étanchéité externe et la dernière nappe d'armures supérieure et, d'autre part, dans une soupape qui travaille en pression différentielle.

Quel que soit le type de conduite flexible qui est utilisé pour constituer une colonne montante (riser) entre les équipements de fond et de surface, ladite conduite flexible progresse dans l'eau de manière contrôlée de sorte que, jusqu'au raccordement avec l'équipement de fond, un équilibre hydrostatique est réalisé dans ladite conduite flexible.

Après raccordement de la conduite flexible à l'équipement de fond, la conduite flexible est soumise à des sollicitations extérieures qui peuvent être classées en deux principales catégories.

La première catégorie est essentiellement constituée par des contraintes de traction qui se développent, d'une part, au niveau du raccordement de l'extrémité supérieure de la conduite flexible avec l'équipement de surface et, d'autre part, avant et après les organes de flottaison disposés sur ladite conduite.

La deuxième catégorie est constituée par les contraintes développées pendant les conditions d'utilisation de la conduite flexible, c'est-à-dire pendant le transport de l'effluent ou lorsque la conduite flexible est vide ce qui correspond à un arrêt de circulation de l'effluent (conduite vide). Dans les deux cas, il règne à l'intérieur de la conduite flexible une pression intérieure $P_{int}$ et à l'extérieur de la conduite une pression extérieure $P_{ext}$.

Lorsque la différence $\Delta P = (P_{int} - P_{ext})$ est positive, les contraintes induites dans la conduite flexible sont radiales et longitudinales, les deux contraintes étant considérées comme positives parce qu'elles sont dirigées vers l'extérieur de la conduite. La contrainte radiale se manifeste par un gonflement alors que la contrainte longitudinale se manifeste par un allongement de la conduite flexible.

Lorsque la différence $\Delta P = (P_{int} - P_{ext})$ est né-gative, les contraintes sont considérées comme étant négatives parce qu'elles sont dirigées vers l'intérieur de la conduite. La contrainte radiale se manifeste par une compression et la contrainte longitudinale se manifeste par un raccourcissement de ladite conduite flexible.

Les contraintes longitudinales dans les deux cas où la différence $\Delta P$ est positive ou négative sont des contraintes de traction.

L'effet de fond T induit dans une conduite flexible dépend entre autre de la différence de pression $\Delta P = (P_{int} - P_{ext})$ et des rayons interne et externe de ladite conduite.

Lorsque T est positif, l'effet de fond est dit effet de fond direct.

Lorsque T est négatif, l'effet de fond est dit effet de fond inverse.

Jusqu'à une certaine profondeur, l'effet de fond inverse a peu de conséquences dommageables pour la conduite flexible et ce, quelle que soit la valeur négative de $\Delta P$.

Au-delà d'une certaine profondeur, l'effet de fond inverse peut avoir de graves conséquences qui peuvent conduire à une détérioration de la conduite flexible. C'est ainsi que la partie de la conduite flexible située à une profondeur comprise par exemple entre 1250 m et 3000 m peut être soumise à l'effet de fond inverse lorsque la différence $\Delta P$ est fortement négative, ledit effet de fond pouvant induire localement une déformation plastique des fils d'armures ce qui conduirait à une détérioration irréversible de la conduite flexible.

De plus, lorsqu'il se produit une rupture de la gaine externe, pour quelque raison que ce soit, la pression dans l'annulaire augmente et devient égale à la pression extérieure qui s'exerce sur la conduite flexible. A 1500 m de profondeur, la pression extérieure qui s'exerce sur la partie de la conduite flexible immergée à cette profondeur est égale à environ 150 bar et les armures qui subissent cette pression externe ont tendance à se vriller.

La présente invention a pour but de proposer une nouvelle structure pour une conduite flexible qui permet de s'opposer efficacement à l'effet de fond inverse.

La présente invention a pour objet une conduite flexible selon la revendication 1.

Suivant le type de conduite flexible ("Rough-bore" ou "Smooth-bore" en anglais), l'ensemble interne étanche est constitué par une carcasse interne, une gaine d'étanchéité interne et une voûte de pression ou par une gaine interne d'étanchéité et une voûte de pression.

Un avantage de la présente invention réside dans le fait que la conduite flexible résiste bien à l'effet de fond inverse et ce, bien qu'on ait éliminé, d'une part, la gaine anti-collapse dans un flexible dont l'élément le plus intérieur est constitué par une gaine étanche à paroi lisse et, d'autre part, la bande de renfort qui est habituellement disposée directement sous la gaine externe d'étanchéité. En fait, on réalise une conduite flexible à deux annulaires intérieur et extérieur sensiblement concentriques et comprenant chacun des éléments spécifiques.

Un annulaire est l'espace compris entre deux gaines tubulaires concentriques étanches. L'annulaire intérieur est délimité par la gaine d'étanchéité interne et la gaine intermédiaire, et comprend la voûte de pression et le groupe d'armures intérieur alors que l'annulaire extérieur est délimité par la gaine intermédiaire et la gaine externe d'étanchéité et comprend le groupe d'armures extérieur.

Dans un flexible dont l'élément le plus intérieur est constitué par une carcasse selon l'invention, la structure est la même que celle décrite ci-dessus à la différence que la carcasse est disposée au-dessous de l'annulaire intérieur, c'est-à-dire au-dessous de la gaine d'étanchéité interne.

Lorsqu'à la suite d'un accident quelconque, la gaine externe d'étanchéité est endommagée, la pression extérieure s'exerçant sur la partie de la conduite flexible située à une profondeur de 1 800 m, par exemple, peut atteindre 180 bar environ; cette pression est transmise dans l'annulaire extérieur et sur la gaine intermédiaire, ce qui amène cette dernière à se plaquer contre le groupe d'armures intérieur. Mais comme la gaine intermédiaire constitue une barrière d'étanchéité pour le groupe d'armures intérieur, l'eau qui a pénétré dans l'annulaire extérieur n'est pas diffusée dans l'annulaire intérieur, ce qui évite le gonflement des nappes d'armures constituant ledit groupe d'armures intérieur et leur déformation en "cage d'oiseau". En effet, la pression d'eau s'exerçant sur la face externe de la gaine intermédiaire équilibre les forces de compression induites sur l'autre face de ladite gaine intermédiaire. En conséquence, le groupe d'armures extérieur ne peut se déformer en "cage d'oiseau" parce qu'il est maintenu par la structure interne.

Selon une autre caractéristique de la présente invention, la différence entre les angles d'armage des groupes d'armures de traction intérieur et extérieur est supérieure à 5°, et de préférence, comprise entre 10 et 15°.

Selon une autre caractéristique de la présente invention, le ou les gaz présents dans l'effluent et diffusant à travers la gaine interne d'étanchéité sont drainés vers l'embout terminal de surface de la conduite flexible dès qu'ils parviennent dans l'annulaire intérieur. De ce fait, ils ne diffusent pas ou diffusent très peu à travers la gaine intermédiaire étanche, ce qui évite la détérioration du groupe d'armures extérieur.

Ainsi, l'annulaire extérieur, compris entre la gaine intermédiaire et la gaine d'étanchéité externe est sec, vis-à-vis du gaz.

D'autres avantages et caractéristiques ressortiront mieux à la lecture d'un mode de réalisation préféré de l'invention, ainsi que des dessins annexés sur lesquels :

- la figure 1 est une vue partielle arrachée en perspective d'une conduite flexible selon un premier mode de réalisation de l'invention, du type flexible dont l'élément le plus intérieur est constitué par une carcasse ;
- la figure 2 est une vue analogue à celle de la figure 1 mais selon une autre variante du premier mode de réalisation ;
- la figure 3 est une vue partielle arrachée en perspective d'une conduite flexible selon un deuxième mode de réalisation de l'invention, du type flexible dont l'élément le plus intérieur est constitué par une gaine étanche à paroi lisse ;
- la figure 4 est une vue schématique en coupe et partielle de la conduite flexible, munie d'un embout terminal ;
- la figure 5 est une représentation graphique du rapport $\sigma_1/\sigma_2$ en fonction de la pression externe pour des pressions internes données.

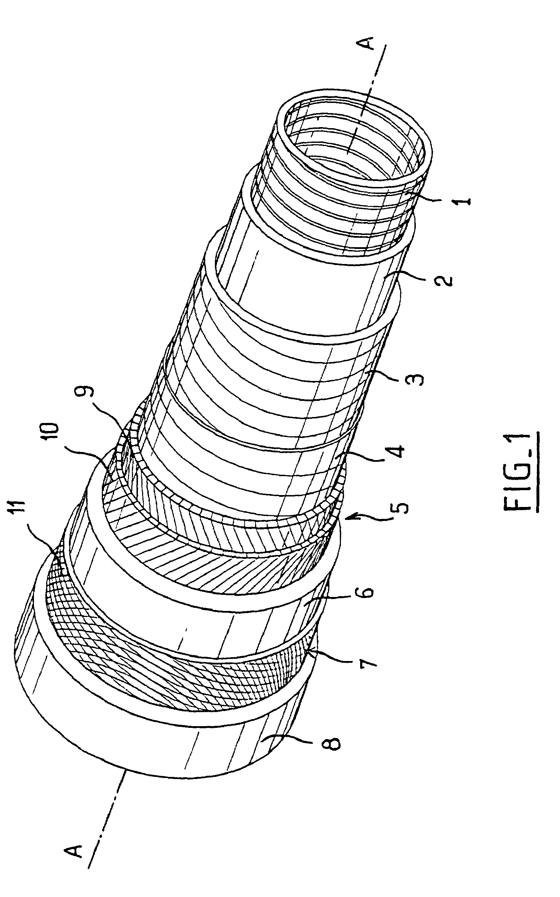

Selon un premier mode de réalisation (figure 1), la conduite flexible est du type dans laquelle l'élément le plus intérieur est constitué par une carcasse et elle comprend, de l'intérieur vers l'extérieur, une carcasse métallique 1, une gaine interne d'étanchéité 2, réalisée dans un matériau polymérique par exemple, une voûte de pression 3, une frette 4 constituée par un enroulement à pas court d'un fil rectangulaire dont l'épaisseur est variable d'une utilisation à une autre, un groupe d'armures de traction intérieur 5, une gaine intermédiaire étanche 6, polymérique par exemple, un groupe d'armures de traction extérieur 7 et une gaine d'étanchéité externe 8 également en un matériau polymérique.

La frette 4 n'est pas toujours utilisée et ne présente un intérêt que lorsque le gisement exploité est sous forte pression, parce qu'elle aide au renforcement de la voûte de pression pour résister efficacement à la contrainte circonférentielle.

La voûte de pression 3 est constituée, par exemple, par un enroulement hélicoïdal d'un fil de forme autour de la gaine interne 2, l'angle de l'hélice formé par l'enroulement étant proche de 90° par rapport à l'axe longitudinal A de ladite conduite. L'enroulement de la voûte de pression 3 peut constituer ce qu'il est convenu d'appeler un groupe d'armures résistant à la composante circonférentielle de la pression même s'il s'agit d'une seule couche d'enroulement.

Le fait d'avoir inséré une gaine intermédiaire étanche 6, entre les deux groupes d'armures de traction 5 et 7, a permis, d'une manière inattendue et surprenante, de constater que la conduite flexible selon l'invention résistait considérablement à l'effet de fond inverse. C'est ainsi que malgré une déchirure effectuée sur la gaine externe d'étanchéité 8 et une application d'une pression externe supérieure à 100 bar, le groupe d'armures de traction extérieur 7 ne se déformait pas en "cage d'oiseau" et que le gonflement des groupes d'armures de traction 5 et 7 restait maintenu dans des limites acceptables.

Selon la présente invention, le premier groupe d'armures de traction intérieur 5 est constitué, de préférence, par deux nappes d'armures de traction 9 et 10, enroulées en sens inverse suivant un enroulement hélicoïdal à pas court dont l'angle d'armage, défini par rapport à l'axe longitudinal A de la conduite, est inférieur à 55° mais supérieur à 35° et de préférence, compris entre 35° et 45°. Ces nappes d'armures de traction 9 et 10 ont pour fonction principale de résister aux composantes longitudinales ou axiales des pressions externe et interne de la conduite flexible, même si elles participent à la résistance des autres contraintes qui se développent dans la conduite flexible. Bien entendu, lesdites nappes d'armures de traction 9 et 10 seront calculées et réalisées dans des matériaux appropriés pour un bon fonctionnement en fonction de l'effluent qui circulera dans ladite conduite flexible et de la profondeur d'eau à laquelle elle est immergée.

Tant que la conduite flexible est pleine d'un fluide tel que l'effluent qui circule à l'intérieur, les seules contraintes appliquées à la conduite sont des contraintes radiales ou circonférentielles qui sont reprises par la voûte de pression 3, et les contraintes de traction dues à un allongement ou à un raccourcissement de ladite conduite qui sont reprises par les nappes d'armures de traction 9 et 10. Or, le fait d'effectuer un enroulement à pas moyen sur la première nappe d'armures rend cette dernière apte à résister auxdites contraintes de traction. Avec un angle d'armage de 35° et de préférence inférieur à 45°, on est assuré que les contraintes de traction développées par les efforts conjugués des pressions interne et externe, lorsque la conduite flexible est en service, seront supportées presque en totalité, par les nappes d'armures de traction 9 et 10.

Pour faire en sorte que les autres contraintes de traction, développées lors de la pose de la conduite telles que le poids, ne soient pas supportées en totalité par les nappes d'armures de traction 9 et 10, la présente invention préconise de réaliser le groupe d'armures de traction extérieur 7 de telle sorte qu'il reprenne une partie plus ou moins importante desdites autres contraintes de traction. A cet effet, le deuxième groupe d'armures de traction extérieur 7 est constitué par au moins un enroulement hélicoïdal à pas long et dont l'angle d'armage est inférieur à 30°.

Dans le mode de réalisation de la figure 1, le groupe d'armures de traction extérieur 7 est constitué par une tresse 11 réalisée par exemple avec des fils de carbone.

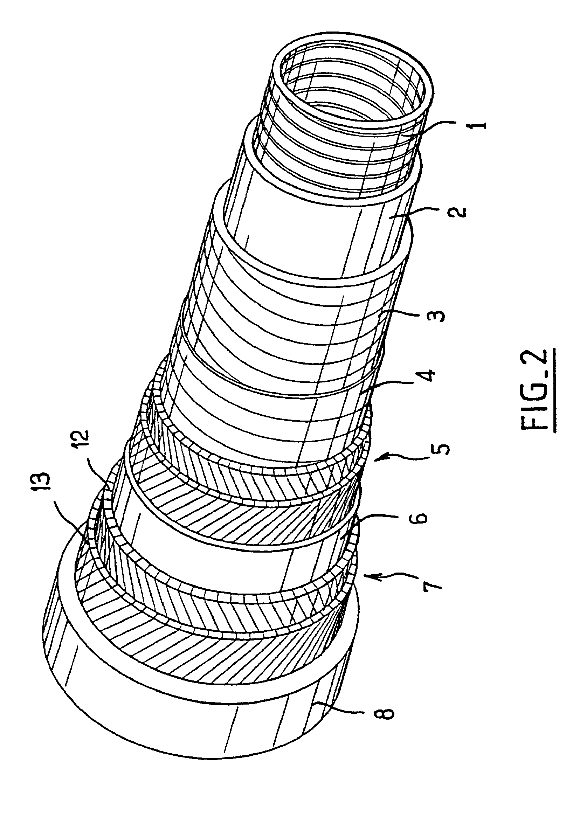

Dans le mode de réalisation de la figure 2, le groupe d'armures de traction extérieur 7 est constitué par deux nappes d'armures 12 et 13 qui sont enroulées en sens inverse avec un pas long et dont l'angle d'armage de chacune est inférieur à 30° et, de préférence, compris entre 15 et 30°. Le sens de l'enroulement de la nappe 12 est, de préférence mais non nécessairement, le même que celui de la nappe 9 du groupe d'armures de traction intérieur 5, alors que le sens d'enroulement de la nappe 13 est le même que celui de la nappe 10.

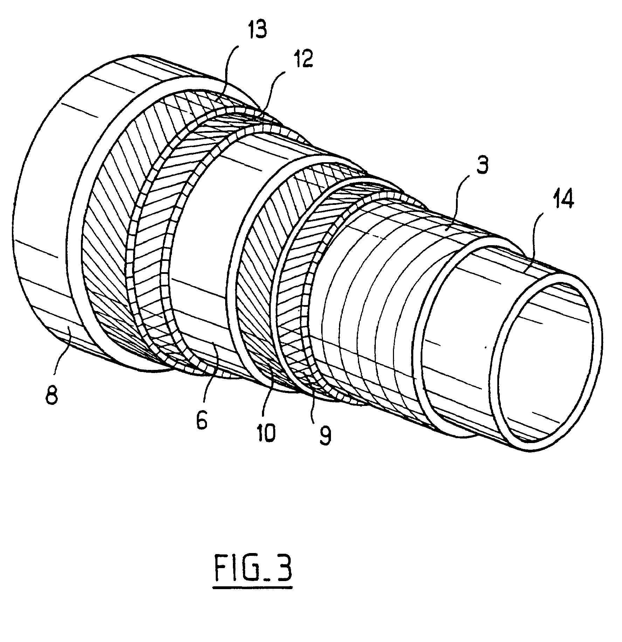

Selon un autre mode de réalisation représenté sur la figure 3, la conduite flexible est du type dans laquelle l'élément le plus intérieur est constitué par une gaine étanche à paroi lisse et elle comprend, de l'intérieur vers l'extérieur, une gaine interne 14, la voûte de pression 3, le groupe d'armures de traction intérieur 5 constitué par les deux nappes d'armures 9, 10, la gaine intermédiaire étanche 6, le groupe d'armures de traction extérieur 7 constitué par les deux nappes d'armures 12 et 13 et enfin la gaine externe d'étanchéité 8.

L'angle d'armage de chaque nappe d'armures de traction des deux groupes intérieur 5 et 7 est inférieur à 55°.

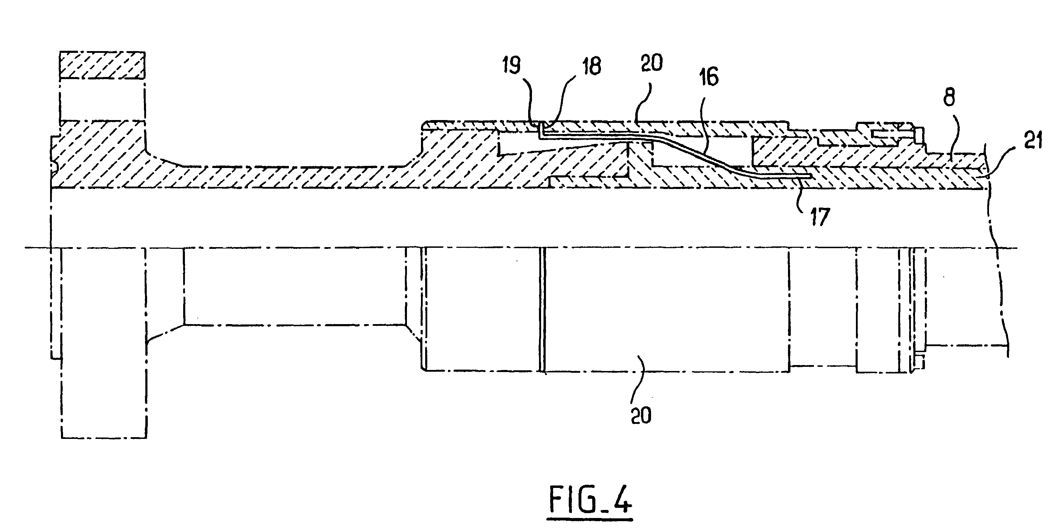

Selon une autre caractéristique de l'invention, le système de drainage des gaz (figure 4) est constitué par une tubulure 16 dont une extrémité 17 est insérée entre les nappes d'armures de traction 9 et 10 du groupe d'armures de traction intérieur 5 et dont l'autre extrémité 18 débouche à l'air libre, à travers un orifice 19 ménagé dans l'embout terminal de surface 20 de la conduite flexible. Sur la figure 4 très simplifiée et schématisée, la référence 21 désigne l'ensemble constitué par tous les éléments situés sous la gaine d'étanchéité externe 8, ledit ensemble comprenant notamment les nappes d'armures de traction 9 et 10 du groupe d'armures 5, entre lesquelles débouche l'extrémité 17 de la tubulure de drainage 16.

Les gaz présents dans l'effluent diphasique circulant dans la conduite flexible diffusent à travers la gaine interne 2 ou 14, la voûte de pression 3 et les nappes d'armures de traction 9 et 10 du groupe d'armures 5, et remontent vers l'embout terminal de surface 20. Comme la tubulure de drainage débouche entre les nappes d'armures de traction 9 et 10, les gaz seront drainés par ladite tubulure de drainage 16, de la même manière que si la tubulure de drainage débouchait juste au-dessous de la gaine d'étanchéité externe, ainsi que cela est explicité dans la demande EP 0 341 144. Toutefois, dans la conduite flexible décrite ci-dessus, la présence d'une soupape n'est pas nécessaire mais rien n'empêche d'en prévoir une si on le souhaite, qu'elle soit à pression différentielle ou non.

De plus, les gaz ne diffusent ou diffusent très peu à travers la gaine intermédiaire étanche 6. En effet, comme l'annulaire intérieur communique avec l'atmosphère, il est donc à la pression atmosphérique et la pression des gaz exercée sur la gaine intermédiaire étanche 6 est très faible, de l'ordre du bar, les gaz n'ayant aucune raison de diffuser à travers la gaine intermédiaire étanche 6 puisqu'ils peuvent s'échapper par l'orifice 19.

Le drainage des gaz étant effectué dans l'annulaire intérieur, le risque de gonflement de l'annulaire extérieur est fortement réduit et le risque d'endommagement par les gaz de la gaine externe d'étanchéité est quasiment nul.

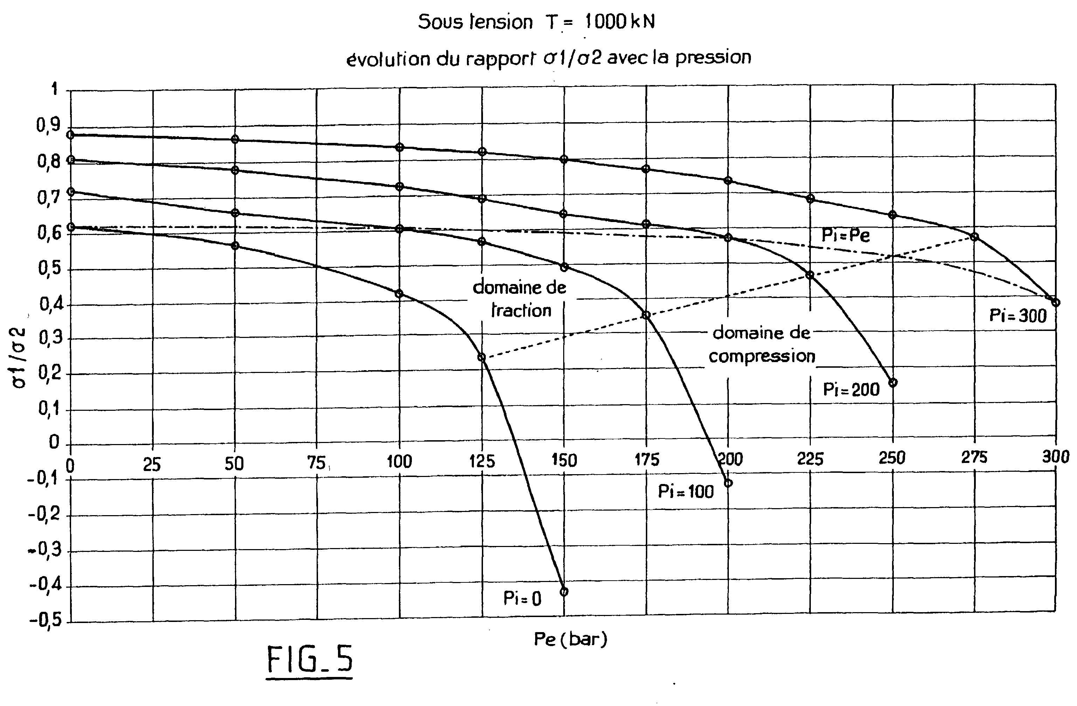

Lorsqu'on souhaite simuler le comportement d'une conduite flexible selon l'invention, on établit des courbes représentatives de l'évolution du rapport $\sigma_1/\sigma_2$ en fonction de la pression externe $P_{ext}$ pour différentes valeurs de la pression interne $P_{int}$ (figure 5).

En simplifiant les calculs, on peut valablement représenter le rapport $\sigma_1/\sigma_2$ par l'expression suivante.

$$\frac{\sigma_1}{\sigma_2} = \frac{E_1 \cos^2 \alpha_1}{E_2 \cos^2 \alpha_2} = [ \frac{1 + k \, tg^2 \alpha_1}{1 + k \, tg^2 \alpha_2} ]$$

Dans cette expression :

$\sigma_1$ est la contrainte de traction dans les nappes d'armures de traction 9 et 10,

$\sigma_2$ est la contrainte de traction dans les nappes d'armures de traction 12 et 13,

$E_1$ est le module d'élasticité du matériau des nappes d'armures de traction 9 et 10 supposées réalisées avec un même matériau,

$E_2$ est le module d'élasticité du matériau des nappes d'armures de traction 12 et 13 supposées réalisées avec un même matériau,

$\alpha_1$ est l'angle d'armage des nappes d'armures de traction 9 et 10,

$\alpha_2$ est l'angle d'armage des nappes d'armures de traction 12 et 13,

K est un nombre qui dépend des angles d'armage et des raideurs $E_i e_i$ de la voûte de pression et des groupes d'armures de traction intérieur et extérieur, $e_i$ étant l'épaisseur équivalente de la nappe i considérée.

L'analyse des courbes de la figure 5 montre que lorsque $P_{int} = P_{ext}$, alors la conduite flexible n'est pratiquement pas soumise à une compression, quelle que soit la profondeur d'eau, ladite conduite flexible étant soumise principalement à des contraintes de traction. Dès que la valeur absolue de la différence $\Delta P$ est égale ou supérieure à 100 bar, alors le domaine de compression peut débuter à partir de 1250 m de profondeur pour une valeur du rapport $\sigma_1/\sigma_2$ égale à environ 0,23.

De préférence, la raideur $e_2 E_2$ du groupe d'armures de traction extérieur 7 est supérieure à la raideur $e_1 E_1$ du groupe d'armures de traction intérieur 5, le rapport $e_2 E_2 / e_1 E_1$ desdites raideurs étant supérieur à 1 et, de préférence, compris entre 1 et 4. Parmi les matériaux convenant à la réalisation du groupe d'armures extérieur, on peut citer, outre le carbone, un polyaramide ou tout autre matériau à haut module d'élasticité.

**Revendications**

1. Conduite flexible du type non lié et comprenant de l'intérieur vers l'extérieur, un ensemble interne étanche et qui comporte une voûte de pression, un premier groupe d'armures de traction intérieur (5), un deuxième groupe d'armures de traction extérieur (7) et une gaine d'étanchéité externe (8), les armures de traction desdits groupes intérieur et extérieur étant enroulées avec un angle d'armage inférieur à 55°, **caractérisée en ce qu'**une gaine intermédiaire étanche (6) est interposée entre les deux groupes d'armures de traction intérieur (5) et extérieur (7), constitués chacun par une paire d'armures ( 9, 10, 12, 13 ) enroulées dans des sens opposés, la paire d'armures de traction intérieure ( 9, 10 ) étant enroulée à pas court et avec un angle d'armage supérieur à 35° et inférieur à 55° et la paire d'armures de traction extérieure (12,13) étant enroulée à pas long et avec un angle d'armage inférieur à 30°.

2. Conduite flexible selon la revendication 1, **caractérisée en ce que** les angles d'armage des paires d'armures de traction intérieure ( 9, 10 ) et extérieure (12,13) présentent une différence supérieure à 5°.

3. Conduite flexible selon l'une des revendications 1 ou 2, **caractérisée en ce que** le groupe d'armures de traction extérieur (7) est constitué par un enroulement d'un fil de carbone.

4. Conduite flexible selon l'une des revendications 1 à 3, **caractérisée en ce que** le groupe d'armures de traction extérieur (7) est constitué par une tresse (11) réalisée avec des fils de carbone.

5. Conduite flexible selon l'une des revendications précédentes, **caractérisée en ce que** la raideur du matériau utilisé pour le groupe d'armures de traction extérieur (7) est supérieure à la raideur du groupe d'armures de traction intérieur (5).

6. Conduite flexible selon la revendication 5, **caractérisée en ce que** le rapport desdites raideurs est supérieur à 1 et de préférence compris entre 1 et 4.

7. Conduite flexible selon l'une des revendications précédentes, du type comprenant en outre un système de drainage des gaz constitué par au moins une tubulure de drainage (16) dont une extrémité (18) débouche au moins indirectement à l'air libre, **caractérisée en ce que** l'autre extrémité (17) de ladite tubulure de drainage (16) débouche entre les nappes d'armures de traction (9, 10) du groupe d'armures intérieur (5).

8. Conduite flexible selon l'une des revendications précédentes, **caractérisée en ce qu'**elle comprend un annulaire intérieur délimité par une gaine interne d'étanchéité (2, 14) et la gaine intermédiaire étanche (6) et comprenant une voûte de pression (3) et un groupe d'armures de traction (5).

9. Conduite flexible selon l'une des revendications 1 à 7, **caractérisée en ce qu'**elle comprend un annulaire extérieur délimité par la gaine d'étanchéité externe (8) et ladite gaine intermédiaire étanche (6) et comprenant un groupe d'armures de traction extérieur (7).

**Patentansprüche**

1. Flexible Rohrleitung der nicht verbundenen Art und umfassend von innen nach außen eine dichte innere Einheit und welche ein Druckgewölbe umfaßt, eine erste Gruppe von inneren Zugarmierungen (5), eine zweite Gruppe von äußeren Zugarmierungen (7) und eine äußere Dichthülse (8), wobei die Zugarmierungen der inneren und äußeren Gruppe mit einem Armierungswinkel von weniger als 55° eingerollt bzw. umwickelt sind, **dadurch gekennzeichnet, daß** eine zwischenliegende Dichthülse (6) zwischen die zwei Gruppen von inneren (5) und äußeren (7) Zugarmierungen zwischengelagert ist, die jeweils durch ein Paar von Armierungen (9, 10, 12, 13) ausgebildet sind, die in entgegengesetzten Richtungen gerollt bzw. gewickelt sind, wobei das Paar von inneren Zugarmierungen (9, 10) mit kleiner Ganghöhe und einem Armierungswinkel von über 35° und unter 55° gerollt ist und das Paar von äußeren Zugarmierungen (12, 13) mit großer Steigerung und einem Armierungswinkel unter 30° gerollt ist.

2. Flexible Rohrleitung nach Anspruch 1, **dadurch gekennzeichnet, daß** die Armierungswinkel der Paare von innerer (9, 10) und äußerer (12, 13) Zugarmierung einen Unterschied von mehr als 5° aufweisen.

3. Flexible Rohrleitung nach einem der Ansprüche 1 oder 2, **dadurch gekennzeichnet, daß** die Gruppe von äußeren Zugarmierungen (7) aus einer Umwicklung bzw. Umhüllung aus einem Kohlenstoffaden ausgebildet ist.

4. Flexible Rohrleitung nach einem der Ansprüche 1 bis 3, **dadurch gekennzeichnet, daß** die Gruppe von äußeren Zugarmierungen (7) aus einer Tresse bzw. einem Flechtwerk (11) gebildet ist, das mit Kohlenstoffäden ausgebildet ist.

5. Flexible Rohrleitung nach einem der vorhergehenden Ansprüche, **dadurch gekennzeichnet, daß** die Steifigkeit des für die Gruppe der äußeren Zugarmierungen (7) verwendeten Materials größer als die Steifigkeit der Gruppe der inneren Zugarmierungen (5) ist.

6. Flexible Rohrleitung nach Anspruch 5, **dadurch ge-** **kennzeichnet, daß** das Verhältnis dieser Steifigkeiten größer als 1 ist und vorzugsweise zwischen 1 und 4 liegt.

7. Flexible Rohrleitung nach einem der vorhergehenden Ansprüche der Art, umfassend außerdem ein Gasdrainagesystem, das aus wenigstens einem Drainagerohr (16) besteht, dessen eines Ende (18) zumindest indirekt an der freien Luft mündet, **dadurch gekennzeichnet, daß** das andere Ende (17) des Drainagerohrs (16) zwischen den Mänteln der Zugarmierungen (9, 10) der Gruppe von inneren Armierungen (5) mündet.

8. Flexible Rohrleitung nach einem der vorhergehenden Ansprüche, **dadurch gekennzeichnet, daß** sie ein ringförmiges Inneres umfaßt, das durch eine innere Dichthülse (2, 14) und die zwischenliegende Dichthülse (6) begrenzt ist und ein Druckgewölbe (3) und eine Gruppe von Zugarmierungen (5) umfaßt.

9. Flexible Rohrleitung nach einem der Ansprüche 1 bis 7, **dadurch gekennzeichnet, daß** sie ein ringförmiges Äußeres umfaßt, das durch die äußere Dichthülse (8) und die zwischenliegende Dichthülse (6) begrenzt ist und eine Gruppe von äußeren Zugarmierungen (7) umfaßt.

**Claims**

1. Flexible pipe of the unbonded type and comprising, from the inside outwards, an internal leakproof assembly comprising a pressure vault, a first, inner group of tensile armor (5), a second, outer, group of tensile armor (7) and an external sealing sheath (8), the tensile armor of the said inner and outer groups being wound at a lay angle of less than 55°, **characterized in that** an intermediate sealing sheath (6) is inserted between the two, inner (5) and outer (7), groups of tensile armor, each group consisting of two layers of reinforcements (9, 10, 12, 13) wound in opposite directions, the two layers of inner reinforcements (9, 10) being wound with a short pitch and at a lay angle of greater than 35° and less than 55°, and the two layers of outer reinforcements (12, 13) being wound with a long pitch and with a lay angle of less than 30°.

2. Flexible pipe according to Claim 1, **characterized in that** the lay angles of the two layers of inner reinforcements (9, 10) and outer reinforcements (12, 13) differ by more than 5° and preferably by between 10 and 15°.

3. Flexible pipe according to either of Claims 1 and 2, **characterized in that** the outer group of tensile armor (7) consists of a winding of a carbon filament.

4.  Flexible pipe according to one of Claims 1 to 3, **characterized in that** the outer group of tensile armor (7) consists of a braid (11) made using carbon filaments.

5.  Flexible pipe according to one of the preceding claims, **characterized in that** the stiffness of the material used for the outer group of tensile armor (7) is greater than the stiffness of the inner group of tensile armor (5).

6.  Flexible pipe according to Claim 5, **characterized in that** the ratio between the said stiffnesses is greater than I and is preferably between 1 and 4.

7.  Flexible pipe according to one of the preceding claims, of the type further comprising a system for draining gases, this system consisting of at least one drainage duct (16), one end (18) of which opens at least indirectly to the open air, **characterized in that** the other end (17) of the said drainage duct (16) emerges between the layers of tensile armor (9, 10) of the inner group of reinforcements (5).

8.  Flexible pipe according to one of the preceding claims, **characterized in that** it comprises an inner annulus delimited by an internal sealing sheath (2, 14) and the intermediate sealing sheath (6) and comprising a pressure vault (3) and a group of tensile armor (5).

9.  Flexible pipe according to one of Claims 1 to 7, **characterized in that** it comprises an outer annulus delimited by the external sealing sheath (8) and the said intermediate sealing sheath (6) and comprising an outer group of tensile armor (7).

FIG_1

EP 0 937 932 B1

FIG.2

EP 0 937 932 B1

13 12 3 14

8 6 10 9

FIG.3

FIG_4

Sous tension T = 1000 kN

évolution du rapport σ1/σ2 avec la pression

FIG.5

EP 0 937 932 B1